# EUROPEAN PATENT APPLICATION

(11) **EP 0 806 168 A1**
(43) Date of publication of application: **12.11.1997**
(21) Application number: 97201382.5
(22) Date of filing: 07.05.1997
(51) Int. Cl.: A47J 31/057

(54) **Coffee filtering apparatus with bypass.**

(30) Priority: 08.05.1996 NL 1003068
(71) Applicant: Sara Lee/DE N.V., 3532 AA Utrecht (NL)
(72) Inventor: Biesheuvel, Arend Cornelis Jacobus, 4251 PS Werkendam (NL); Akkerman-Theunisse, Johanna Wihelmina Gerada, 3971 AN Driebergen (NL)
(74) Representative: Smulders, Theodorus A.H.J., Ir.

(57) **Abstract**

A coffee filtering apparatus (34) provided with a bypass filter holder (32) comprising an extraction chamber (26) in which ground coffee can be received and a bypass channel (42) separated from the chamber. The apparatus further comprises a tube (30) having a tube inlet (36) and two tube outlet openings (38,40), the tube inlet (36) of the tube being connected to the outlet (8) of a hot-water dispensing channel (6), one of the tube outlet openings (38,40) being located downstream of another tube outlet opening, one of the tube outlet openings being positioned so that, in use, it dispenses hot water to the bypass channel (42), and another one of the tube outlet openings (38,40) being positioned so that it dispenses hot water to the extraction chamber (26). The bypass filter holder (32) and the tube (30) also form an assembly according to the invention that can be used for converting a conventional coffee filtering apparatus into a bypass system.

## Description

The invention relates to a coffee filtering apparatus comprising a water reservoir, a heating member for heating water from the water reservoir, a hot-water dispensing channel to which water heated by the heating member is fed, a bypass filter holder comprising an extraction chamber in which ground coffee can be received and a bypass channel separated from the chamber and having an inlet and an outlet, a conduit system connected downstream to an outlet of the hot-water dispensing channel for respectively feeding, at least substantially simultaneously, water heated by the heating member to the extraction chamber and the inlet of the bypass channel, wherein the outlet of the bypass channel is positioned so that coffee extract coming from the extraction chamber and water from the bypass channel can flow into a coffee reservoir which, in use, is positioned under the bypass filter holder and wherein the conduit system further comprises setting means for setting the ratio between the magnitudes of the flows of liquid that are fed to the extraction chamber and the inlet of the bypass channel respectively.

The invention also relates to an assembly for modifying an existing coffee filtering apparatus to render it suitable for preparing coffee according to a bypass method wherein the coffee filtering apparatus comprises a water reservoir, a heating member for heating water from the water reservoir, a hot-water dispensing channel to which water heated by the heating member is fed, a filter holder comprising an extraction chamber in which ground coffee can be received and a conduit system, detachably connected to an outlet of the hot-water dispensing channel, for feeding water heated by the heating member to the extraction chamber.

A bypass system is used when it is desired to prepare coffee that is not too strong. This can of course be realized by using more water and less ground coffee. However, this has as a drawback that relatively much water flows through the coffee bed consisting of the ground coffee, as a consequence of which the coffee extract acquires a bitter flavor. This is caused by the fact that the coffee bed is extracted to too large an extent. A solution to this problem is the addition of hot water to the prepared coffee extract. In other words, the coffee extract is diluted with hot water. To realize this, one may for instance first start to prepare coffee in a conventional manner. This involves hot water being fed to the coffee bed and the coffee extract being received in a container. When for instance 60% of the hot water has flown through the coffee bed, the entire holder can be removed so that the remaining quantity of hot water is directly fed to the coffee extract. In this case, the coffee extract is for instance contained in a conventional coffee pot. However, a drawback of this method is that the contact time between the hot water and the coffee bed is reduced. As a result, a crater is formed in the coffee bed, causing the coffee bed to be extracted in an inefficient manner. This problem is solved in the apparatus of the type described in the opening paragraph, in that simultaneously, a portion of the water is fed to the extraction chamber and a portion of the water is directly fed to the coffee extract. Accordingly, the contact time between the hot water and the coffee bed is maintained without change and is independent of the percentage of the total quantity of water that is present in the water reservoir and that is directly fed to the coffee extract via the bypass channel.

A coffee filtering apparatus of the type described in the opening paragraph is known from, inter alia, US Patent 4,064,795. Here, the conduit system consists of a first conduit piece connected by a first side to the outlet of the hot-water dispensing channel and by a second side to the inlet of a T-piece. Further, a second and a third conduit piece are connected to a first and a second outlet of the T-piece respectively. The second and third conduit pieces first extend from the T-piece in a horizontal direction to subsequently deflect downwards. The ends of the second and third conduit pieces open into the inlet of the bypass and the extraction chamber respectively. Finally, a setting screw is included into the T-piece, whereby the outlet of the T-piece, leading to the inlet of the bypass channel, can be partly or wholly closed. The drawback of this known conduit system is that it is a technically complicated and, accordingly, costly construction for the object that is to be realized thereby. Moreover, the use of a T-piece has as a drawback that it can easily become clogged through calcium precipitation.

The invention seeks to meet these drawbacks and is characterized in that the conduit system comprises a single tube having a tube inlet and two tube outlet openings, wherein the tube inlet of the tube is connected to the outlet of the hot-water dispensing channel, one of the tube outlet openings is located downstream of another tube outlet opening, one of the tube outlet openings is positioned so that, in use, it dispenses hot water to the bypass inlet, and another one of the tube outlet openings is positioned so that it dispenses hot water to the extraction chamber.

As the conduit system comprises only a single tube, it is a relatively simple construction that can be realized at low costs. Moreover, the tube need not have any sharp bends, so that the risk of calcium precipitation is minimized. Indeed, in the flow profile there will be no "dead corners" where the flow rate is relatively low so that an increased risk of calcium precipitation is present.

In particular, the tube outlet opening located downstream of the other tube outlet opening, in use, feeds water to the inlet of the bypass channel. Further, the control means can for instance comprise a control valve, located in a liquid flow path between the two tube outlet openings, for controlling the magnitude of the flow of liquid along the liquid flow path mentioned. Such a construction has the advantage that the controllable valve can be realized in a particularly simple manner; for instance by means of a plate rotatably mounted in the tube. Moreover, the location of the controllable valve has the advantage that it is readily accessible to a user. In other words, a user can freely and easily control the quantity of hot water that is to be directly fed to the coffee extract. This is not possible in the apparatus according to US Patent 4,064,795, because the setting screw is difficult to reach for a user and is intended to be set only once. However, according to the invention, it is also possible to close the entire bypass in a simple operation to enable coffee to be prepared in a conventional manner.

According to another aspect of the invention, the assembly of the single tube and the bypass holder can also be used to replace the original conduit system and the original filter holder respectively of a conventional coffee filtering apparatus. The assembly, consisting of the single tube and the bypass holder according to the invention, can then be marketed as one package to improve the above-mentioned conventional coffee filtering apparatus. Particularly because many conventional coffee filtering apparatus comprise a conduit system consisting of a single tube having only one outflow opening, the single tube of the assembly according to the invention moreover has the advantage that it can easily be arranged in such coffee filtering apparatus, without, moreover, the design of the coffee filtering apparatus being changed appreciably.

Preferably, the single tube is dimensioned so that a fixed (ideal) bypass occurs when the above-mentioned setting means are opened completely. The bypass can selectively be adapted to the individual taste. Moreover, it is possible to close the bypass completely so that coffee is prepared in a conventional manner.

Further, it preferably applies that a liquid flow path of the conduit system starts at the tube inlet and ends at the two tube outlet openings.

It is observed that British patent application 2,167,652 discloses a coffee filtering apparatus wherein a portion of the flow of water flows between the filter holder and a filter bag filled with ground coffee and located in the filter holder. Hence, in this apparatus, no bypass channel separated from the filter holder is present, as is the case according to the invention. Moreover, this coffee filtering apparatus, too, is provided with a conduit system comprising a T-piece which divides a flow of water coming from the hot-water dispensing channel to obtain two flows of water that are fed to the extraction chamber and the bypass channel respectively. Such a conduit system has the same drawbacks as discussed in relation to US Patent 4,064,795. Also, British patent application 2,167,652 does not teach that a liquid flow path of the conduit system starts at a tube inlet of a tube and ends in the two tube outlet openings of this tube. Instead, the liquid flow path ends in a first tube outlet opening of a first tube which also comprises the tube inlet and in a second tube outlet opening of a second tube which is connected to the first tube via the above-mentioned T-piece.

Presently, a number of possible embodiments of the invention will be specified with reference to the accompanying drawings, wherein:
Fig. 1 shows a possible embodiment of a conventional coffee filtering apparatus;
Fig. 2 is a partially transparent view of a first embodiment of a coffee filtering apparatus and an assembly according to the invention;
Fig. 3a is a partially transparent top plan view of a tube of the coffee filtering apparatus and the assembly according to Fig. 2, with the setting means assuming a first extreme position;
Fig. 3b is a partially transparent top plan view of a tube of the coffee filtering apparatus and the assembly according to Fig. 2, with the setting means assuming a second extreme position;
Fig. 3c is a partially transparent top plan view of a tube of the coffee filtering apparatus and the assembly according to Fig. 2, with the setting means assuming an intermediate position between the first and the second extreme position;
Fig. 4 shows a second embodiment of a coffee filtering apparatus and an assembly according to the invention;
Fig. 5a is a partially transparent top plan view of a tube of the coffee filtering apparatus and the assembly according to Fig. 4, with the setting means assuming a first extreme position;
Fig. 5b is a partially transparent top plan view of a tube of the coffee filtering apparatus and the assembly according to Fig. 4, with the setting means assuming a second extreme position;
Fig. 5c is a partially transparent top plan view of a tube of the coffee filtering apparatus and the assembly according to Fig. 4, with the setting means assuming an intermediate position between the first and the second extreme position;
Fig. 6 is a transparent side elevation of an alternative embodiment of the tube of the assembly according to Fig. 2; and
Fig. 7 is a top plan view of a raised edge of the apparatus according to Fig. 2 or 4.

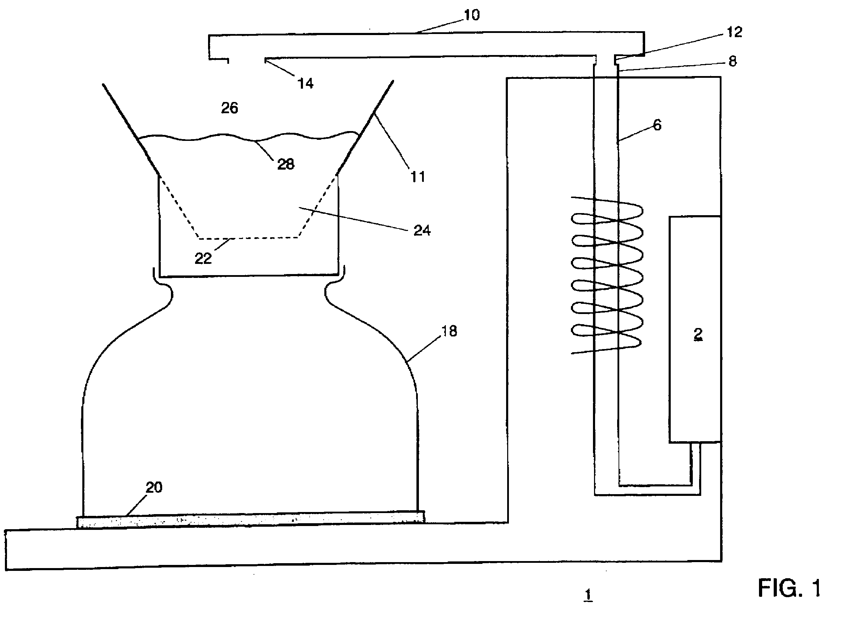

In Fig. 1, reference numeral 1 designates a conventional coffee filtering apparatus. The coffee filtering apparatus 1 comprises a water reservoir 2 in which water can be received for preparing coffee extract. The apparatus further comprises a heating member 4 for heating water from the water reservoir, after which the heated water is passed further via a hot-water dispensing channel 6 located downstream of the heating member 4. The hot-water dispensing channel 6 ends in a schematically shown outlet 8. A conduit system 10, detachably connected to the outlet 8 of the hot-water dispensing channel 6, feeds the hot water to a filter holder 11. In this example, the conduit system 10 consists of a single tube having an inlet opening 12 which is connected to the outlet 8 of the hot-water dispensing channel and an inlet opening 14 located above the filter holder 11. The filter holder 11 is positioned on a coffee extract reservoir in the form of a coffee pot 18 which, in turn, is placed on a hotplate 20 of the coffee filtering apparatus.

The bottom 22 and the obliquely vertical sidewalls of the filter holder 11 enclose an extraction chamber 26 in which, in use, ground coffee can be received. Here, the filter holder 11 can be of a type which involves the use of paper filter bags. It is also possible that the filter holder 11 is of a type wherein a part of the above-mentioned sidewall 24 comprises a fine-mesh metal filter.

The operation of the coffee filtering apparatus is as follows. First, a quantity of water is introduced into the water reservoir. Also, the extraction chamber 26 of the filter holder is filled with ground coffee, in combination or not in combination with a paper filter bag. The filter holder is positioned on a coffee pot, as shown in Fig. 1. After this, the coffee filtering apparatus is switched on. The water contained in the water reservoir 2 is gradually fed to the heating member 4. In this heating member, the water is heated up to a predetermined temperature, for instance 70°C, and via the hot-water dispensing channel in the conduit system 10, the water is poured onto a coffee bed 28 of ground coffee contained in the extraction chamber 26. In the coffee bed 28, coffee extract is formed which can flow into the coffee pot via openings (not shown) in the bottom 22 of the filter holder 11. If, for instance, six cups of coffee are prepared, all the water from the water reservoir 2 will, after for instance about 5 minutes, be heated and fed, gradually spread in time, to the coffee bed 28. Some time later again, at least most of the coffee extract formed will have ended up in the coffee pot and the coffee is ready for consumption.

When it is desired to make less strong coffee with the conventional coffee filtering apparatus of Fig. 1, this can be realized for instance by including less ground coffee in the extraction chamber 26 of the filter holder 11. The height of the coffee bed 28 will then decrease. However, because the same quantity of water is fed to a smaller amount of coffee powder, this has as a consequence that the coffee extract indeed becomes less strong, but it will in fact have a bitter, somewhat burnt taste. When for instance a quantity of hot water corresponding to 60% of the quantity of coffee extract that is to be prepared is poured onto the coffee bed 28, after which the filter holder 11 is then removed, so that the remaining 40% of the hot water is directly fed to the coffee pot 18, this has as a drawback that the time span in which hot water is fed to the filter holder 11 is reduced. Moreover, a considerable part of the hot water fed to the coffee bed 28 will not yet have passed entirely through the coffee bed when the filter holder 11 is removed.

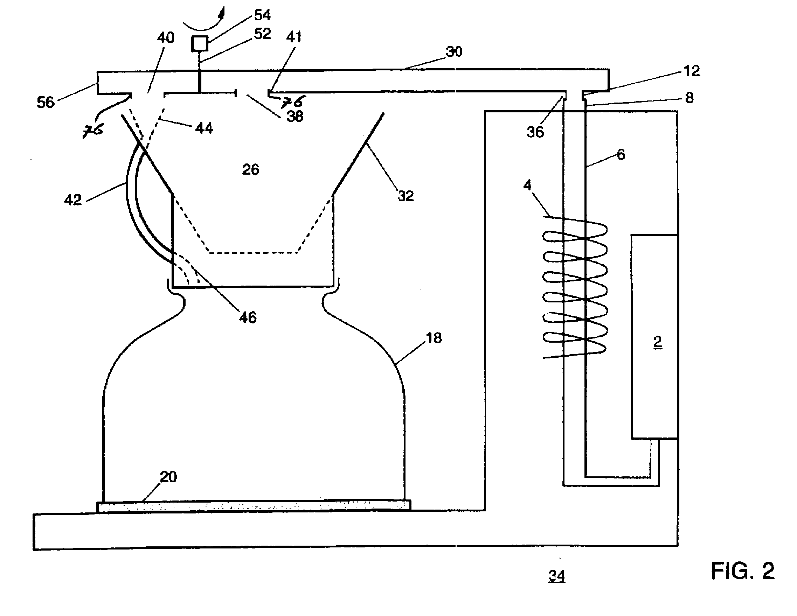

According to the invention, these drawbacks are met by replacing the conduit system 10 and the filter holder 11 of the coffee filtering apparatus according to Fig. 1 by a tube 30 and a filter holder 32 according to the invention. As the coffee filtering apparatus 1 according to Fig. 1 comprises a conduit system 10 that is detachably connected to the outlet 12 of the hot-water dispensing channel 6, it can readily be removed to be replaced by a single tube 30 according to the invention. After replacement of these parts by the assembly comprising the filter holder 32 and the single tube according to the invention, a coffee filtering apparatus 34 according to the invention is obtained, a possible embodiment of which is shown in Fig. 2.

In Figs. 1 and 2, corresponding parts have been provided with identical reference numerals. In this example, the conduit system consists of a single tube 30 having a tube inlet 36 connected to the inlet 8 of the hot-water dispensing channel 6. The tube 30 further comprises two tube outlet openings 38 and 40. A liquid flow path of the conduit system begins at the tube inlet 36 and ends at the two tube outlet openings 38, 40. Provided around the tube outlet opening 38, on the inside of the tube 30, is a raised edge 41. The filter holder 32 again comprises the extraction chamber 26 in which ground coffee can he received and, moreover, a bypass channel 42 separated from this chamber and having an inlet 44 and an outlet 46. The outlet of the bypass channel is positioned so that coffee extract coming from the extraction chamber and water from the bypass channel can flow to the coffee reservoir in the form of the coffee pot 18. This involves the tube outlet opening 38 being positioned so that from this opening, hot water can be fed to the extraction chamber 26. On the other hand, the tube outlet opening 40 is positioned so that from this opening, water can be fed to the inlet 44 of the bypass channel 42. The tube 30 further comprises setting means 48 for setting the ratio between the magnitudes of the flows of liquid fed to the extraction chamber and the inlet of the bypass channel respectively. In this example, the setting means 48 consist of a controllable valve located in a liquid path between the two tube outlet openings 38 and 40. This valves consists of a plate 50 accommodated in the tube 30 so as to be rotatable. For this purpose, the plate is bearing-mounted in the sidewalls of the tube 30, with a rotary shaft of the plate projecting, via an opening 52 in the sidewall of the tube 30, from the tube 30 and comprising a setting button 54 whereby the plate in the tube can be rotated.

The operation of the coffee filtering apparatus is as follows. When hot water is fed from the hot-water dispensing channel 6 to the tube 30, it will flow in the direction of the tube outlet openings 38 and 40. When the water arrives at the tube outlet opening 38, the raised edge 41 prevents all the water from directly leaving the tube via the tube outlet opening 38 without (a portion) of the water flowing further in the direction of the tube outlet opening 40. When the water has arrived at the tube outlet opening 40, the water level at the tube outlet opening 38 will have risen further to above the raised edge 41. The result is that the water will flow from the tube 30 via the two outlet openings 38, 40. Hence, the raised edge 41 prevents the water from not or not sufficiently being able to reach the tube outlet opening 40. In this example, the height of the edge is about 0.5 to 1.5 mm. The raised edge 41 thus acts as a flow resistance element provided between the two tube outlet openings 38, 40.

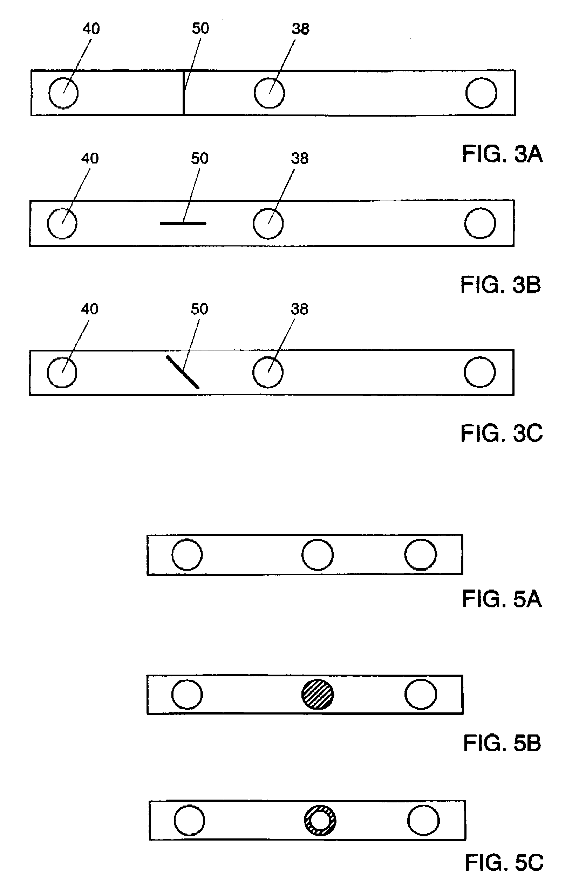

For obtaining the ideal bypass effect, the plate is positioned by means of the setting button 54 so that it entirely releases a liquid flow path between the tube outlet opening 38 and the tube outlet opening 40 (see Fig. 3b). This implies that, in use, for instance 60% of the hot water is fed via the tube outlet opening 38 to the extraction chamber 26, while the remaining 40% of the hot water is fed via the tube outlet opening 40 to the inlet 44 of the bypass channel 42. In this manner, the coffee extract contained in the coffee pot 18 is diluted with hot water without the coffee-making time, i.e. the period in which hot water is fed to the extraction chamber 26, being shortened. If it is not desired to prepare coffee by means of a bypass, the plate 50 can, by means of the setting button 54, be manipulated so as to close the flow path between the tube outlet opening 38 and the tube outlet opening 40 (see also Fig. 3a). In that case, all the water is fed to the extraction chamber in a conventional manner. According to the invention, a user can also manipulate the plate 50 in a simple manner so as to assume a rotational position between the extreme positions shown in Figs. 3a and 3b, whereby a reduced bypass effect is realized. Preferably, the tube extends at least substantially in horizontal direction. The tube can also be substantially straight in order that, in this manner, the technical construction is kept as simple as possible. In this example, the tube outlet openings are located in a sidewall of the tube and are moreover directed downwards. This, too, implies that the technical construction is simple yet particularly efficient. Accordingly, the end 56 of the tube downstream of the tube outlet openings 38, 40 is closed.

The tube 30 can for instance be of round design. In that case, the plate 30 will preferably also have a round shape corresponding thereto. However, it is also possible that the tube 30 is of rectangular or square design, with the plate 50 having a correspondingly rectangular or square shape.

Fig. 4 shows an alternative embodiment of an assembly and a coffee filtering apparatus according to the invention, with parts corresponding to Figs. 1 and 2 being provided with identical reference numerals. From this it appears that the filter holder 32 is similar to the filter holder 32 according to Fig. 2 and is merely rotated 180° about its axial axis. This implies that the inlet 44 of the bypass 42 is now located to the right, rather than to the left, of the coffee pot 18. The coffee filtering apparatus according to Fig. 4 now comprises a single tube 58 which replaces the tube 10 according to Fig. 1 and has a length at least substantially corresponding to the tube 10 according to Fig. 1. Hence, an advantage is that in principle, the tube 58 need no longer change the outward appearance of the coffee filtering apparatus and that, moreover, there is always room for the tube 58. The tube 58 comprises a first outlet opening 60 and a second outlet opening 62 located downstream of the first outlet 60. Provided around the first tube outlet opening 60 is a raised edge 63 whose function can be prepared with that of the raised edge 41. In use, the tube outlet opening 62 located downstream of the tube outlet opening 60 feeds hot water to the extraction chamber 26. On the other hand, the tube outlet opening 60, in use, feeds hot water to the bypass inlet 44. In this example, the tube outlet opening 60 comprises setting means in the form of a controllable diaphragm 64 whereby the size of the tube outlet opening 60 can be varied. The diaphragm 64 is known per se and is therefore not further explained. However, it is observed that on the outside of the tube 58, a setting ring 66 is located by means of which the diaphragm can be adjusted. If the diaphragm 64 is entirely open, as shown in Fig. 5a, hot water will be fed to the inlet 42 as well as to the extraction chamber 26. When, on the other hand, the diaphragm 64 is entirely closed by means of the setting ring 66, as shown in Fig. 5b, all the hot water is fed to the extraction chamber 26 and coffee extract is prepared in a conventional manner. Finally, the diaphragm 64 can be set so that the tube outlet opening 60 is partly released, to create a more or less reduced bypass effect. In other words, in that case for instance 80% of the hot water is fed to the extraction chamber 26 and 20% of the hot water is directly fed, via the bypass 42, to the coffee pot 18. Also to the tube 58, as shown in Fig. 4, it applies that it can have a round as well as a rectangular or square section. Here, too, the tube 58 is preferably straight and extends in horizontal direction. Also, the tube outlet openings 60 and 62 are provided in a sidewall of the tube 58 and are moreover directed downwards. This, too, on the one hand involves a simple technical construction, which on the other hand guarantees an optimum result.

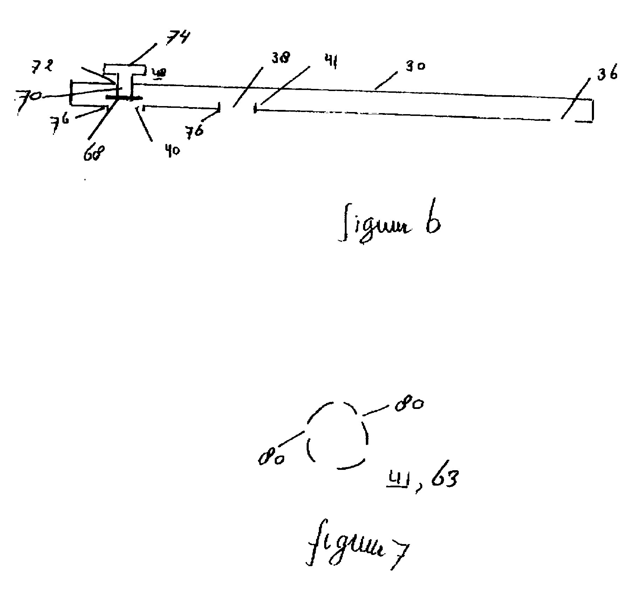

The raised edge 41, 63 of the apparatus according to Figs. 2 and 4 can further be provided with one or more openings 80 (see the top plan view according to Fig. 7), permitting the tube to empty itself properly after use. In fact, the outlet opening in question is then provided with a liquid flow resistance element retarding the flow of liquid through this outlet opening. The resistance element can then also be of a settable design for setting the magnitude of the flow resistance formed by the resistance element. The above can be realized by rendering the height of the raised edge settable.

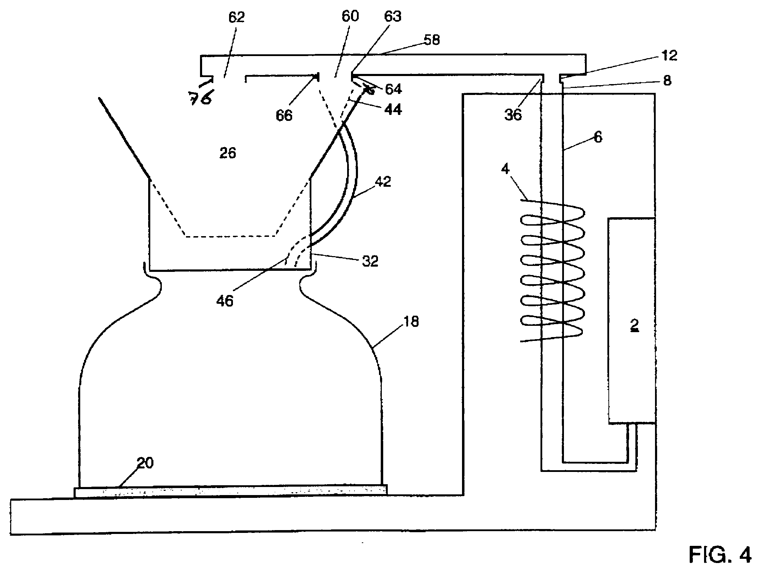

The tube 30 of Fig. 2 can for instance also be designed as shown in Fig. 6. In Fig. 6, the setting means comprise a closing cap 68 located in the tube 30. The closing cap can be moved in vertical direction to one of the tube outlet openings 40 for controlling the ratio between the flow of liquid from the tube outlet opening 38 and the flow of liquid from the tube outlet opening 40. Hence, the setting means comprise means for setting the distance between the closing cap 68 and the tube outlet opening 40. This involves the closing cap 68 being directed approximately parallel to the tube outlet openings. For this purpose, the closing cap 68 is mounted on a spindle 70 extending outwards through a threaded opening 72 in an upper side of the tube 30. By turning a button 74 mounted on an end of the spindle 70, the closing cap 68 can be moved towards or away from the tube outlet opening 40. By moving the closing cap 68 towards the tube outlet opening 40, the flow of water from the tube outlet opening 40 will decrease. In an extreme position, the closing cap 68 can even close the tube outlet opening 40 entirely. Of course, such a closing cap 68 can also be used at the tube outlet opening 38. Also, in the apparatus according to Fig. 4, such a closing cap 68 can be used at the tube outlet opening 62 and preferably at the tube outlet opening 60.

The invention is by no means limited to the above-outlined embodiments. For instance, the tube 30 and the tube 58 can be undetachably connected to the outlet 12 when the coffee filtering apparatus of Figs. 2 and 4 is marketed as one whole. Only when a conventional coffee filtering apparatus provided with a conduit system as shown in Fig. 1 should be converted into a coffee filtering apparatus according to Fig. 2 or Fig. 4, the relevant tubes will in principle be detachably connected to the outlet 8 of the hot-water dispensing channel. Also, each of the raised edges 41 and 63 can extend along only a part of the tube outlet openings 38 and 60 respectively. In addition, on the outside of the tube 30 and the tube 58 and around one or more of the tube outlet openings 38, 40, 60, 62, an edge 76 can be provided.

These and other obvious variants are all understood to fall within the framework of the invention.

## Claims

1. A coffee filtering apparatus comprising a water reservoir, a heating member for heating water from the water reservoir, a hot-water dispensing channel to which water heated by the heating member is fed, a bypass filter holder comprising an extraction chamber in which ground coffee can be received and a bypass channel separated from the chamber and having an inlet and an outlet, a conduit system connected downstream to an outlet of the hot-water dispensing channel for respectively feeding, at least substantially simultaneously, water heated by the heating member to the extraction chamber and the inlet of the bypass channel, wherein the outlet of the bypass channel is positioned so that coffee extract coming from the extraction chamber and water from the bypass channel can flow into a coffee reservoir which, in use, is positioned under the bypass filter holder and wherein the conduit system further comprises setting means for setting the ratio between the magnitudes of the flows of liquid that are fed to the extraction chamber and the inlet of the bypass channel respectively, **characterized in that** the conduit system comprises a single tube having a tube inlet and two tube outlet openings, wherein the tube inlet of the tube is connected to the outlet of the hot-water dispensing channel, one of the tube outlet openings is located downstream of the other tube outlet opening and wherein one of the tube outlet openings is positioned so that, in use, it dispenses hot water to the bypass inlet, wherein the other one of the tube outlet openings is positioned so that it dispenses hot water to the extraction chamber.

2. A coffee filtering apparatus according to claim 1, characterized in that a liquid flow path of the conduit system begins at the tube inlet and ends at the two tube outlet openings.

3. A coffee filtering apparatus according to claim 1 or 2, characterized in that at the tube outlet opening located upstream of the other tube outlet opening, a flow resistance is provided which limits the magnitude of the flow of liquid from the tube outlet opening located downstream of the other tube outlet opening.

4. A coffee filtering apparatus a claim 1, 2 or 3, characterized in that around at least a part of the tube outlet opening located upstream of the other tube outlet opening, a raised edge is provided on the inside of the tube.

5. A coffee filtering apparatus according to claim 4, characterized in that the height of the raised edge is of settable design.

6. A coffee filtering apparatus according to any one of the preceding claims, characterized in that in use, the tube outlet opening located downstream of the other tube outlet opening feeds hot water to the inlet of the bypass channel.

7. A coffee filtering apparatus according to any one of preceding claims 1-5, characterized in that in use, the tube outlet opening located downstream of the other tube outlet opening feeds hot water to the extraction chamber.

8. A coffee filtering apparatus according to any one of the preceding claims, characterized in that with the setting means, the size of a through-flow area of at least one of the tube outlet openings can be set.

9. A coffee filtering apparatus according to claim 8, characterized in that the setting means comprise a diaphragm having an opening whose size can be controlled for controlling the through-flow area of at least one of the tube outlet openings.

10. A coffee filtering apparatus according to claim 9, characterized in that the setting means comprise a controllable valve located in a liquid flow path between the two tube outlet openings for controlling the magnitude of the flow of liquid along said liquid path.

11. A coffee filtering apparatus according to claim 10, characterized in that the controllable valve consists of a plate mounted in the tube for rotation.

12. A coffee filtering apparatus according to claim 11, characterized in that the plate is at least rotatable between a first and a second rotational position, wherein the normal of the plate in the first rotational position extends parallel to the axial direction of the tube and in the second rotational position extends perpendicularly to the axial direction of the tube.

13. A coffee filtering apparatus according to any one of claims 1-7, characterized in that the setting means comprise at least a closing cap located in the tube and above one of the outflow openings and means for setting the distance between the closing cap and said outlet opening.

14. A coffee filtering apparatus according to claim 13, characterized in that the closing cap in an extreme position closes the outlet opening.

15. A coffee filtering apparatus according to any one of the preceding claims, characterized in that the tube extends at least substantially in a horizontal direction.

16. A coffee filtering apparatus according to any one of the preceding claims, characterized in that the tube is at least substantially straight.

17. A coffee filtering apparatus according to any one of the preceding claims, characterized in that the tube outlet openings are provided in a sidewall of the tube.

18. A coffee filtering apparatus according to claim 17, characterized in that the tube outlet openings are directed downwards.

19. A coffee filtering apparatus according to claim 17 or 18, characterized in that an end of the tube located downstream of the tube outlet openings is closed.

20. A coffee filtering apparatus according to claim 11 or 12, characterized in that the plate is mounted on a rotary shaft of which at least one free end projects from the tube, through an opening in the wall of the tube, for setting the rotational position of the plate.

21. A coffee filtering apparatus according to any one of the preceding claims, characterized in that the tube inlet of the tube is detachably connected to the outlet of the hot-water dispensing channel.

22. An assembly for modifying an existing coffee filtering apparatus to render it suitable for preparing coffee according to a bypass method wherein the coffee filtering apparatus comprises a water reservoir, a heating member for heating water from the water reservoir, a hot-water dispensing channel to which water heated by the heating member is fed, a filter holder comprising an extraction chamber in which ground coffee can be received and a conduit system, detachably connected to an outlet of the hot-water dispensing channel, for feeding water heated by the heating member to the extraction chamber, characterized in that the assembly comprises a single tube and a bypass holder in substitution for the original conduit system and the original filter holder respectively of the coffee filtering apparatus, wherein the tube and the bypass holder correspond to the tube and the bypass holder of the coffee filtering apparatus according to claim 21.

23. A tube suitable for use in a coffee filtering apparatus according to any one of claims 1-21.

24. An assembly for modifying an existing coffee filtering apparatus to render it suitable for preparing coffee according to a bypass method wherein the coffee filtering apparatus comprises a water reservoir, a heating member for heating water from the water reservoir, a hot-water dispensing channel to which water heated by the heating member is fed, a filter holder comprising an extraction chamber in which ground coffee can be received and a conduit system, detachably connected to an outlet of the hot-water dispensing channel, for feeding water heated by the heating member to the extraction chamber, characterized in that the assembly comprises a single tube and an bypass holder in substitution for the original conduit system and the original filter holder respectively of the coffee filtering apparatus, wherein:
- the tube comprises a tube inlet and two tube outlet openings wherein, in use, the tube inlet of the tube is suitable for being detachably connected to the outlet of the hot-water dispensing channel and wherein the tube comprises a liquid flow path extending between the inlet and one of the tube outlet openings and wherein the other tube outlet opening is located in the same liquid flow path;
- the bypass filter holder comprises an extraction chamber in which ground coffee can be received and a bypass channel separated from the chamber and having an inlet and an outlet;
- the positions of the tube outlet openings in the tube are such that, in use, hot water can be dispensed to the bypass inlet by one of the tube outlet openings, while by the other tube outlet opening, water can be dispensed to the extraction chamber; and
- the tube further comprises setting means for setting the ratio between the magnitudes of flows of liquid from the respective outlet openings of the tube.
